(19) Europäisches Patentamt / European Patent Office / Office européen des brevets

(11) **EP 2 596 844 A1**

(12) **EUROPEAN PATENT APPLICATION**

(43) Date of publication:
    **29.05.2013 Bulletin 2013/22**

(51) Int Cl.:
    ***B01D 45/06*** (2006.01)          ***B01D 45/08*** (2006.01)
    ***F24C 15/20*** (2006.01)

(21) Application number: **12194095.1**

(22) Date of filing: **23.11.2012**

(84) Designated Contracting States:
    **AL AT BE BG CH CY CZ DE DK EE ES FI FR GB GR HR HU IE IS IT LI LT LU LV MC MK MT NL NO PL PT RO RS SE SI SK SM TR**
    Designated Extension States:
    **BA ME**

(30) Priority: **25.11.2011 KR 20110123954**

(71) Applicant: **Samsung Electronics Co., Ltd Gyeonggi-do 443-742 (KR)**

(72) Inventors:
    • **Lee, Kyu Suk**
      **Gyeonggi-do (KR)**
    • **Jeong, Hyun Ku**
      **Gyeonggi-do (KR)**
    • **Shin, Kyu Ho**
      **Seoul (KR)**
    • **Lee, Jin Ho**
      **Gyeonggi-do (KR)**

(74) Representative: **Walaski, Jan Filip**
    **Venner Shipley LLP**
    **200 Aldersgate**
    **London**
    **EC1A 4HD (GB)**

(54) **Grease Filter**

(57)    A grease filter capable of reducing a pressure loss generated while air passes through the grease filter, and cooking apparatus are provided. The grease filter includes an inflow portion configured for oil particles to be introduced therethrough, and a channel provided to discharge air current and oil particles, which are introduced through the inflow portion, to an outside, wherein the channel includes an upper channel disposed in parallel while spaced apart in a predetermined distance to form the inflow portion, and a lower channel comprising a direction changing portion provided to change a direction of the air current and the oil particles introduced through the inflow portion, and a guide portion having a predetermined angle to guide the oil particles and the air current having been changed in direction by the direction changing portion.

FIG. 2

EP 2 596 844 A1

**Description**

The present invention relates to a grease filter having high efficiency in capturing oil.

A ventilation apparatus may be installed at a kitchen. A ventilation apparatus is configured to discharge contaminated air, that is, hazardous gas, generated during a cooking process of a food, and introduce fresh air to flow to an indoor space, thereby improving the living environment.

The ventilation apparatus may be provided with a filter to eliminate hazardous gas and with a grease filter to prevent the accumulation of oil particles, for example, inside a duct. The filter and the grease filter, instead of immediately discharging the hazardous gas generated in a kitchen to an atmosphere, capture the polluted material such as oil from the hazardous gas, and then discharge the purified air to an atmosphere.

The grease filter may be configured to prevent a duct and other driving apparatus of a ventilation apparatus from being polluted, by capturing fine oil particles that are generated during a cooking process. In order to capture the oil particles efficiently, the flow of the oil particles should be interrupted by the filter inside a flow field so that the oil particles collide with one another, and thereby the oil particles are captured while being near and/or stuck to each other.

However, a pressure loss inside the flow field may be induced by the interruption of the flow of the oil particles or by the collision of the oil particles.

The pressure loss not only reduces the energy efficiency of the ventilation apparatus, but also increases the flow noise and vibration noise thereof.

According to an aspect of an exemplary embodiment of the present invention, a grease filter is provided that is capable of reducing a pressure loss generated while air passes through the grease filter.

According to an aspect of an exemplary embodiment of the present invention, a grease filter is provided that is capable of increasing the efficiency in capturing oil.

Additional aspects of the disclosure will be set forth in part in the description which follows and, in part, will be obvious from the description, or may be learned by practice of the disclosure.

In accordance with an aspect of an exemplary embodiment of the present invention, a grease filter includes an inflow portion and a channel. The inflow portion may be configured for oil particles to be introduced therethrough. The channel may be provided to discharge air current and oil particles, which are introduced through the inflow portion, to an outside. The channel may include an upper channel disposed in parallel, while spaced apart a predetermined distance to form the inflow portion, and a lower channel including a direction changing portion provided to change a direction of the air current and the oil particles introduced through the inflow portion, and a guide portion having a predetermined angle to guide the oil particles and the air current, the direction of which are changed by the direction changing portion.

The guide portion may be formed in an obtuse angle with respect to the direction changing portion.

The upper channel may include an inflow guide formed in a predetermined angle to form the inflow portion, and a multiple-surface portion extending from the inflow guide to maximize a contact surface of the oil particles.

A plurality of multiple-surface portions may be provided.

The multiple-surface portion may include inner angle(s) formed by having each surface of the multiple-surface portion meet one another, and the inner angle may be formed to be equal to, or greater, than 90 degrees

The multiple-surface portion may be formed to surround an outer side of the guide portion of the lower channel.

The channel may include a discharging portion configured to discharge the oil particles and the air current to outside, and the discharging portion may be formed between the guide portion of the lower channel and at least one surface of the multiple-surface portion of the upper channel

The guide portion and the at least one surface of the multiple-surface portion forming the discharging portion may be disposed in parallel to each other.

A width of the guide portion and a width of the at least one surface of the multiple-surface portion forming the discharging portion may be gradually narrowed toward the outside.

An end portion of the multiple-surface portion may be diverged to be disposed opposite each other.

In accordance with an exemplary embodiment of the present invention, a cooking apparatus includes a heating apparatus, a body, a suction portion and a grease filter. The body may be provided with the heating apparatus at an upper side thereof. The suction portion may be provided to intake oil particles and air current, which are generated through the cooking portion, from one side of the body. The grease filter may be configured to capture oil particles that are taken in through the suction portion. The grease filter may include an inflow portion configured for oil particles and air current to be introduced therethrough, and a panel provided for the oil particles and the air current that are introduced through the inflow portion to be discharged to an outside. The panel may include an upper channel provided in parallel while being spaced apart in a predetermined distance to form the inflow portion, and a lower channel including a direction changing portion provided to change a direction of the oil particles and the air current that are introduced through the inflow portion, and a guide portion having a predetermined angle to guide the oil particles and the air current, of which the direction is changed by the direction changing portion.

The suction portion may be configured to extend formed from the one side of the body upward, and include a plurality of suction holes formed to intake the oil particles and the air current, which are generated from the heating apparatus, sideways.

The guide portion may be formed in an obtuse angle with respect to the direction changing portion.

A plurality of multiple-surface portions may be provided, and include inner angles formed as each surface of the multiple-surface portions meet one another. The inner angle may be formed to be equal to, or greater than, 90 degrees.

The channel may include a discharging portion configured to discharge the oil particles and the air current to an outside, and the discharging portion may be formed between the guide portion and at least one surface of the multiple-surface portion.

A grease filter minimizes the flow resistance of air, thereby reducing a pressure loss at an inside a flow field.

In addition, efficiency in capturing oil may be enhanced by maximizing the contact surface of the oil particles.

These and/or other aspects of the disclosure will be more apparent from the following description of certain exemplary embodiments with reference to the accompanying drawings, in which:

FIG. 1 illustrates a cooking apparatus provided with a grease filter installed thereto in accordance with an exemplary embodiment of the present invention;

FIG. 2 illustrates a grease filter in accordance with an exemplary embodiment of the present invention;

FIG. 3A illustrates a grease filter in accordance with an exemplary embodiment of the present invention;

FIG. 3B illustrates a test on a velocity of flow passing through a grease filter in accordance with an exemplary embodiment of the present invention;

FIG. 4 illustrates a grease filter in accordance with an exemplary embodiment of the present invention;

FIG. 5A illustrates a grease filter in accordance with an exemplary embodiment of the present invention;

FIG. 5B illustrates a test on a velocity of flow passing through a grease filter in accordance with an exemplary embodiment of the present invention;

FIGS. 6 to 7 illustrate exemplary capture efficiencies at air volumes of 120CFM and 240CFM according to different types of filters; and

FIGS. 8 to 9 illustrate exemplary capture efficiencies relative to pressure loss at air volumes of 120CFM and 240CFM according to different types of filters.

Reference will now be made in detail to the embodiments of the present invention, examples of which are illustrated in the accompanying drawings, wherein like reference numerals refer to like elements throughout.

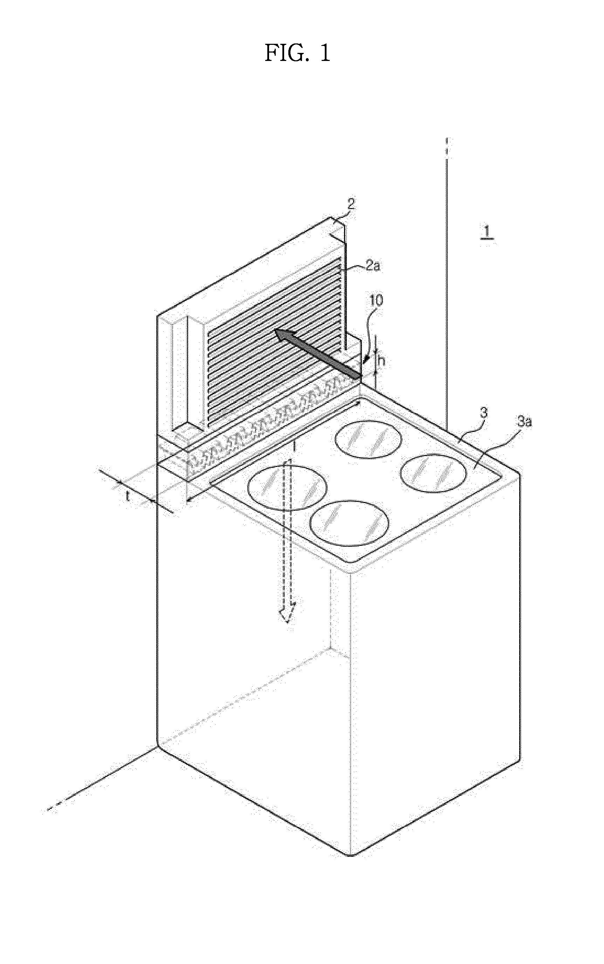

Referring to FIG. 1, a cooking apparatus 1 includes a body 3 forming an exterior, a heating apparatus 3A provided at an upper side of the body 3, and a suction portion 2 provided on an edge of a side of the body 3.

The heating apparatus 3A is provided to apply heat directly to a food or a cookware containing food by generating high-temperature heat.

Although an electric range, an upper portion of which is provided in a flat shape and disposed at an upper surface thereof, is illustrated as the heating apparatus 3A of the embodiment of the present invention, a gas range or an apparatus configured to perform cooking by applying heat on food may also be used as the heating apparatus 3A.

The suction portion 2 may be protrudedly formed from an upper surface of the body 3 while being disposed at a side away from the center of the upper surface of the body. A plurality of suction holes 2A may be formed in a horizontal direction while spaced apart from each other in a predetermined distance on one surface of the suction portion 2, and the polluted air, the smoke, or the odour generated during a cooking process is absorbed through the plurality of suction holes 2A.

The suction hole 2A may be formed to take in the polluted air, which is being generated by the heating apparatus 3A, sideways.

Although not illustrated herein, the body 3 may be provided with a draft apparatus to take in the polluted air, smoke, or odour through the suction portion 2, and a discharging duct and a discharging hole for the air introduced by the draft apparatus to flow therethrough.

A large amount of oil particles generated during a cooking process may be included in the polluted air that is induced through the suction portion 2.

A grease filter 10 may be mounted to prevent the oil particles from being accumulated on a filter or at an inside a ventilation path.

The grease filter 10 may be mounted at a lower end portion of the suction portion 2 so that the polluted air, the smoke, or the odour induced through the suction hole 2A may pass through the grease filter 10 and having a height h and width t.

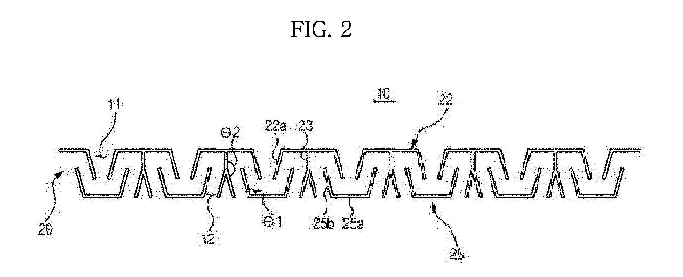

As illustrated in FIGS. 2 to 3B, the grease filter 10 includes an inflow portion 11 through which the oil particles and the air current are introduced, and a channel 20 configured so that the oil particles and the air current that are introduced through the inflow portion 11 may be discharged to an outside area.

The channel 20 includes an upper channel 22, disposed in parallel while spaced apart a predetermined distance, so that the inflow portion 11 is formed, and a lower channel 25 to change the direction of the oil particles and the air current introduced through the inflow portion 11 and to guide the oil particles and the air current introduced through the inflow portion 11 to be discharged to an outside.

The upper channel 22 is provided in at least one unit thereof. The upper channel 22 may be formed in a bilateral symmetry while being consecutively disposed. The upper channel 22 includes an inflow guide 22a having a predetermined angle to form the inflow portion 11, and a multiple-surface portion 23 extendedly formed from the inflow guide 22a.

Since the inflow guide 22a may provided in a bilateral symmetry pair, the inflow portion 11 may be formed by the inflow guide 22a of one side of the upper channel 22 and the inflow guide 22a of the other side of the upper channel 22 facing each other.

The oil particles and the air current introduced through the inflow portion 11 formed as such change the direction thereof through a direction changing portion 25a of the lower channel 25.

The lower portion channel 25 includes the direction changing portion 25a provided at a lower side of the inflow portion 11 to change the direction of the oil particles and the air current that are introduced through the inflow portion 11, and a guide portion 25b extendedly formed from the direction changing portion 25a to guide the oil particles and the air current, after having the direction thereof changed by the direction changing portion 25a, to be discharged to an outside.

Since a sudden change of a direction of a flow may cause a flow resistance, the guide portion 25b of the lower channel 25 may form an obtuse angle θ1 with respect to the direction changing portion 25a.

The oil particles and the air current guided by the guide portion 25b of the lower channel 25 move along the channel 20 that is formed by the lower channel 25 and the upper channel 22.

The upper channel 22 includes the multi-surface portion 23 that is extendedly formed from the inflow guide 22a to maximize the contact surface of the oil particles. By maximizing the contact surface of the oil particles as such, the efficiency in capturing the oil particles may be enhanced.

The multiple-surface portion 23 may be formed with at least three surfaces. In addition, the multiple-surface portion 23 may be formed to surround an outer side of the guide portion 25b of the lower channel 25.

The multiple-surface portion 23 includes an inner angle θ2 formed by having the surfaces of the multi-surface portion 23 meet each other, and the inner angle θ2 may be equal to or greater than 90 degrees.

Having the inner angle θ2 equal to, or greater than, 90 degrees may minimize the flow resistance by preventing the sudden change of the direction with respect to the flow of the air current, and at the same time, may maximize the contact surface of the oil particles.

The channel 20 includes a discharging portion 12 so that the oil particles and the air current may be discharged to an outside.

The discharging portion 12 may be formed between the guide portion 25b of the lower channel 25 and at least one surface of the multiple-surface portion 23 of the upper channel 22.

The multiple-surface portion 23 of the upper channel 22 according to the embodiment of the present invention is provided in an upside-down shape of a letter 'Y' having three surfaces.

The multiple-surface portion 23 may include a first multiple-surface portion 23a extending from the inflow guide 22a of the upper channel 22, a second multiple-surface portion 23c extending from the first multiple-surface portion 23a downward while forming 90 degrees with respect to the first multiple-surface portion 23a, and a third multiple-surface portion 23b extending from the second multiple-surface portion 23c while forming an angle of 90 degrees or above with respect to the second multiple-surface portion 23c.

The discharging portion 12 is formed by the outer surface of the guide portion 25b of the lower channel 25 and by the third multiple-surface portion 23b that is positioned at the end portion of the multiple-surface portion 23 of the upper channel 22.

Thus, the direction of oil particles and the air current introduced through the inflow portion 11 is changed by the direction changing portion 25a of the lower channel 25. The oil particles and the air current move through the guide portion 25b of the lower channel 25 and the multiple-surface portion 23 of the upper channel 22, and attains high capturing efficiency while making contact with the first multiple-surface portion 23a, the second multiple-surface portion 23c, and the third multiple-surface portion 23b.

The sectional area of the multiple-surface portion 23 increases in proportion to the number of the surfaces added, and the number of the surfaces added increases the sectional area, thereby increasing the probability of the oil particles being captured while colliding to a wall surface of the filter. Furthermore, by having added number of the surfaces, the elbow resistance is reduced, thereby reducing the pressure loss. The pressure loss at an elbow tube may be calculated as in equation (1):

$$\Delta P = f \cdot \theta/90 \cdot (r \cdot V2)/2g \qquad (1)$$

where $\Delta P$ = pressure loss, f = Coefficient of Friction, $\theta$ = Angle, V2 = Fluid Velocity, r = Air Density, g = Acceleration of Gravity.

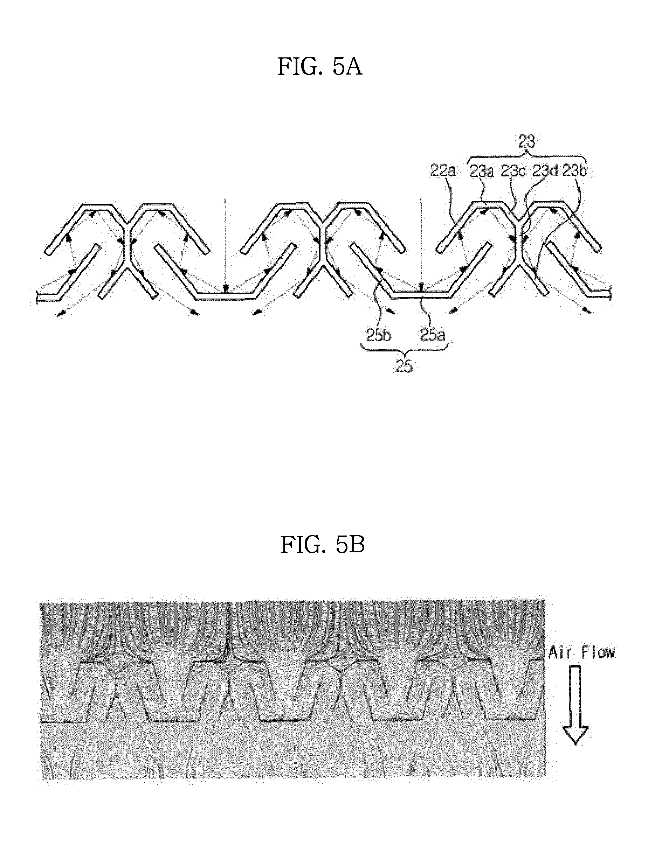

Under similar conditions, if the multiple-surface portion 23 of an exemplary embodiment (e.g., FIG. 5) has a surface added, the total number of the surfaces is 4, thereby having 0.5 times of pressure loss when compared to the pressure loss in a case when the total number of the surfaces is 3.

Thus, the capturing efficiency of the oil particles may be enhanced, while minimizing the pressure loss.

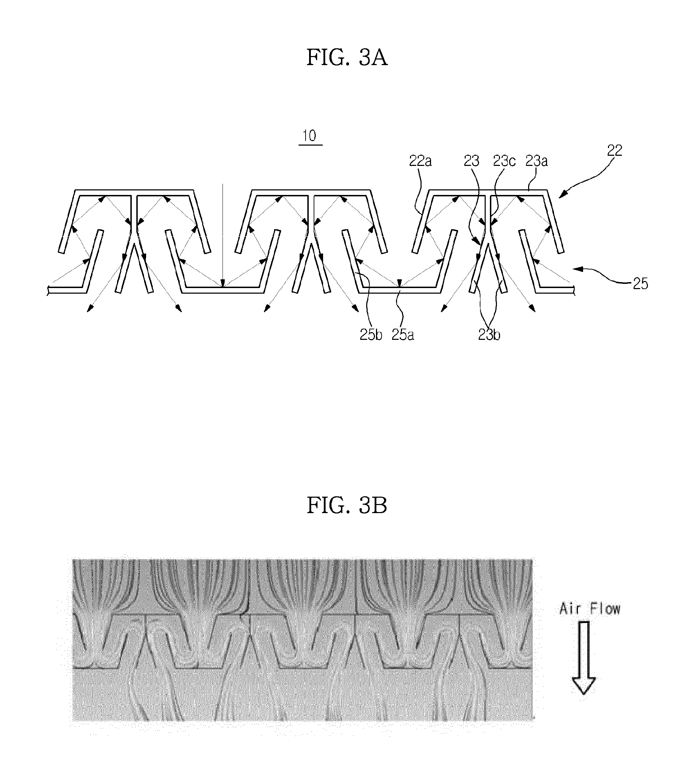

FIG. 3B illustrates a test on a velocity of flow passing through a grease filter in accordance with an exemplary embodiment of the present invention.

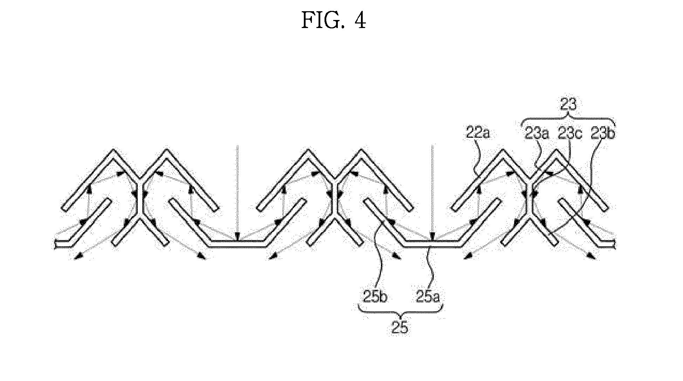

As illustrated on FIG. 4, the grease filter 10 according to an embodiment of the present invention includes the upper channel 22 having a plurality of multiple-surface portions 23.

The multiple-surface portion 23 includes the first multiple-surface portion 23a, for example, extendedly formed in perpendicular from the inflow guide 22a of the upper channel 22, the second multiple-surface portion 23c extendedly formed from the first multiple-surface portion 23a toward a lower direction, and the third multiple-surface portion 23b extendedly formed from the second multiple-surface portion 23c while having an angle equal to or greater than 90 degrees.

The discharging portion 12 may be formed by the outer surface of the guide portion 25b of the lower channel 25 and by the third multiple-surface portion 23b that is positioned at the end portion of the multiple-surface portion 23 of the upper channel 22.

Thus, the direction of oil particles and the air current introduced through the inflow portion 11 is changed by the direction changing portion 25a of the lower channel 25. The oil particles and the air current then move along the channel 20 that is formed through the guide portion 25b of the lower channel 25 and the multiple-surface portion 23 of the upper channel 22.

The oil particles may be able to attain high capturing efficiency while making contact with the first multiple-surface portion 23a, the second multiple-surface portion 23c, and the third multiple-surface portion 23b of the multiple-surface portion 23. As illustrated on FIG. 5A, the grease filter 10 according to an exemplary embodiment of the present invention includes the upper channel 22 having a plurality of multiple-surface portions 23.

The multiple-surface portion 23 includes the first multiple-surface portion 23a extendedly formed in a horizontal direction from the inflow guide 22a of the upper channel 22, the second multiple-surface portion 23c extendedly formed from the first multiple-surface portion 23a while having an angle equal to or greater than 90 degrees, the third multiple-surface portion 23D extendedly formed from the second multiple-surface portion 23c toward a lower direction, and a fourth multiple-surface portion 23b extendedly formed from the third multiple-surface portion 23D while having an angle equal to or greater than 90 degrees.

The discharging portion 12 is formed by the outer surface of the guide portion 25b of the lower channel 25 and by the third multiple-surface portion 23D and the fourth multiple-surface portion 23b.

Thus, the direction of oil particles and the air current introduced through the inflow portion 11 is changed by the direction changing portion 25a of the lower channel 25. The oil particles and the air current then move along the channel 20 that is formed through the guide portion 25b of the lower channel 25 and the multiple-surface portion 23 of the upper channel 22.

The oil particles may be able to attain high capturing efficiency while making contacts with the first multiple-surface portion 23a, the second multiple-surface portion 23c, the third multiple-surface portion 23D, and the fourth multiple-surface portion 23b. Referring to FIG. 5B, a simulation of testing the velocity of the fluid passing through the grease filter 10 is illustrated according to an exemplary embodiment of the present invention.

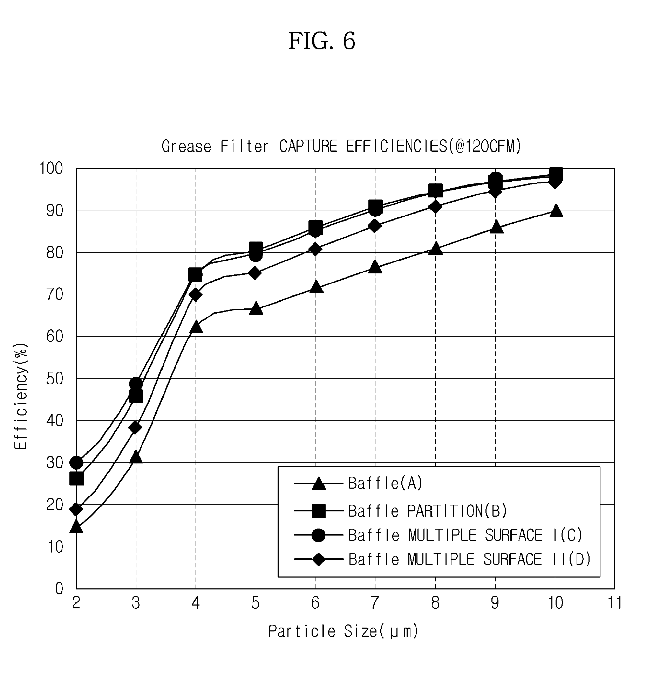

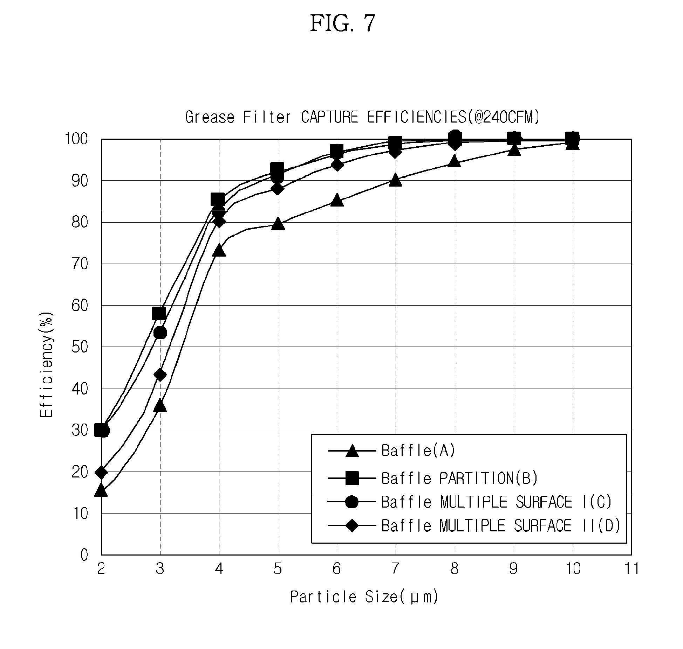

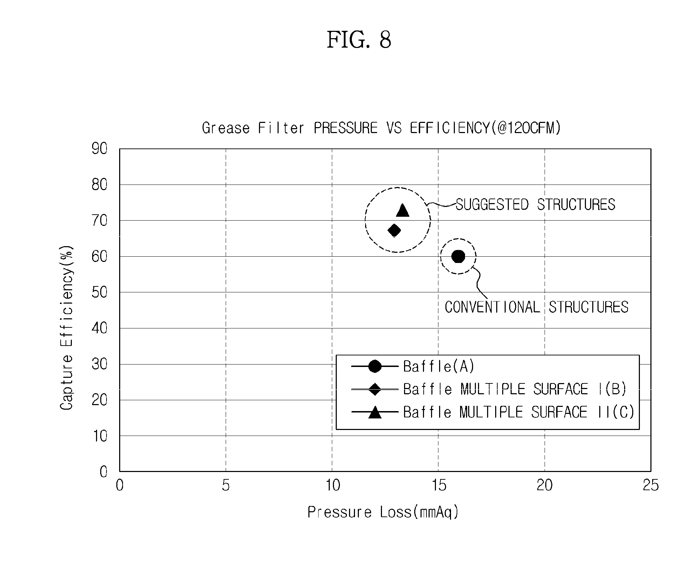

FIGS. 6 to 7 illustrate exemplary capture efficiencies at air volumes of 120CFM and 240CFM according to different types of filters, where CFM = cubic feet per minute. FIGS. 8 to 9 illustrate exemplary capture efficiencies relative to pressure loss at air volumes of 120CFM and 240CFM according to different types of filters.

The air flow of the simulation is set at 120CFM and 240CFM, and the analysis of the air flow is conducted with regard to a conventional baffle A, a structure B having a partition in the middle of a baffle, a structure C having three multiple-surface portions according to the embodiment of the present invention, and a structure D having four multiple-surface portions according to the embodiment of the present invention.

As a result, when tested from the small particles having the particle sizes in the range of $2\mu m$ and $3\mu m$, the structures C and D having the multiple-surface portions of an exemplary embodiment of the present invention are shown to have higher efficiency when compared to the conventional structures A and B.

FIGS. 8 to 9 illustrate exemplary capture efficiencies relative to pressure loss at air volumes of 120CFM and 240CFM according to different types of filters.

The simulation is conducted with reference to a conventional baffle A, a structure B having three multiple-surface portions according to an exemplary embodiment of the present invention, and a structure C having four multiple-surface portions.

The X-axis represents the pressure loss, and the Y-axis represents the average capture efficiency of the filter.

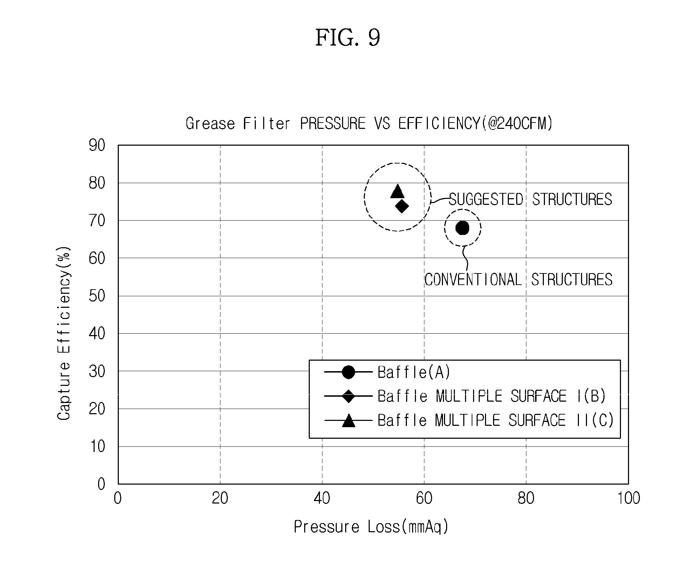

A filter may be considered to be of high quality when having a low pressure loss and high capture efficiency. The further to the left side of Figs. 8 and 9, a result of a simulation is indicated, the lower pressure loss the result of the simulation represents, and the higher to the top side of Figs. 8 and 9 a result of a simulation is marked indicated, the higher capture efficiencies the result of the simulation represents. Thus, a better quality filter has characteristics illustrated towards the top-left side of Figs. 8 and 9.

As illustrated in Figs. 8 and 9, for example, the structures B and C having multiple-surface portions according to an exemplary e embodiment of the present invention have superior qualities when compared to the conventional structure A.

Although a few embodiments of the present invention have been shown and described, it would be appreciated by those skilled in the art that changes may be made in these embodiments without departing from the principles of the invention, the scope of which is defined in the claims.


**Claims**

1. A grease filter, comprising:

   an inflow portion configured for oil particles to be introduced therethrough; and
   a channel provided to discharge air and oil particles, which are introduced through the inflow portion, to an outside, wherein the channel comprises:

   an upper channel disposed in parallel while spaced apart a predetermined distance, to form the inflow portion; and
   a lower channel comprising a direction changing portion provided to change a direction of the air current and the oil particles introduced through the inflow portion, and a guide portion having a predetermined angle to guide the oil particles and the air current, of which the direction is changed by the direction changing portion.

2. The grease filter of claim 1, wherein the guide portion is formed in an obtuse angle with respect to the direction changing portion.

3. The grease filter of claim 1, wherein the upper channel comprises:

   an inflow guide formed in a predetermined angle to form the inflow portion, and
   a multiple-surface portion extending from the inflow guide to maximize a contact surface of the oil particles.

4. The grease filter of claim 3, wherein the multiple-surface portion is provided in plural.

5. The grease filter of claim 3, wherein the multiple-surface portion comprises an inner angle formed by having each surface of the multiple-surface portion meet one another, and
   the inner angle is formed to be equal to or greater than 90 degrees

6. The grease filter of claim 3, wherein the multiple-surface portion is formed in a way to surround an outer side of the guide portion of the lower channel.

7. The grease filter of claim 3, wherein the channel comprises a discharging portion configured to discharge the oil particles and the air current to an outside, and
   the discharging portion is formed between the guide portion of the lower channel and at least one surface of the multiple-surface portion of the upper channel.

8. The grease filter of claim 7, wherein the guide portion and the at least one surface of the multiple-surface portion forming the discharging portion are disposed in parallel to each other.

9. The grease filter of claim 7, wherein a width of the guide portion and a width of the at least one surface of the multiple-surface portion forming the discharging portion are gradually narrowed toward the outside.

10. The grease filter of claim 3, wherein an end portion of the multiple-surface portion is diverged to be disposed opposite each other.

FIG. 1

FIG. 2

FIG. 3A

FIG. 3B

Air Flow

FIG. 4

# FIG. 5A

# FIG. 5B

Air Flow

# FIG. 6

Grease Filter CAPTURE EFFICIENCIES(@120CFM)

Legend:
- Baffle(A)
- Baffle PARTITION(B)
- Baffle MULTIPLE SURFACE I(C)
- Baffle MULTIPLE SURFACE II(D)

X-axis: Particle Size(μm)
Y-axis: Efficiency(%)

FIG. 7

Grease Filter CAPTURE EFFICIENCIES(@240CFM)

Legend:
- Baffle(A)
- Baffle PARTITION(B)
- Baffle MULTIPLE SURFACE I(C)
- Baffle MULTIPLE SURFACE II(D)

Y-axis: Efficiency(%)
X-axis: Particle Size(μm)

## FIG. 8

Grease Filter PRESSURE VS EFFICIENCY(@120CFM)

# FIG. 9

Grease Filter PRESSURE VS EFFICIENCY(@240CFM)

SUGGESTED STRUCTURES

CONVENTIONAL STRUCTURES

Legend:
- ● Baffle(A)
- ◆ Baffle MULTIPLE SURFACE I(B)
- ▲ Baffle MULTIPLE SURFACE II(C)

X-axis: Pressure Loss(mmAq)
Y-axis: Capture Efficiency(%)

Europäisches
Patentamt

European
Patent Office

Office européen
des brevets

# EUROPEAN SEARCH REPORT

Application Number

EP 12 19 4095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/106804 A2 (SHAW MICHAEL LEON [GB]) 3 September 2009 (2009-09-03) * abstract; figures 2,8 * ----- | 1-8 | INV. B01D45/06 B01D45/08 F24C15/20 |
| X | DE 196 03 689 A1 (GUTERMUTH PATENT GMBH & CO KG [DE]) 28 August 1997 (1997-08-28) * abstract; figures 3-5 * ----- | 1-5,7,10 | |
| X | JP 2005 034744 A (TAIKISHA KK) 10 February 2005 (2005-02-10) * abstract; figures 2,4,6 * ----- | 1,3-7,10 | |
| X | US 3 945 812 A (DOANE DEWITT H) 23 March 1976 (1976-03-23) * abstract; figure 5 * ----- | 1-8 | |

| TECHNICAL FIELDS SEARCHED (IPC) |
|---|
| B01D F24C |

The present search report has been drawn up for all claims

| Place of search | Date of completion of the search | Examiner |
|---|---|---|
| Munich | 5 March 2013 | Sembritzki, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 12 19 4095

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2013

| Patent document cited in search report | | Publication date | Patent family member(s) | | Publication date |
|---|---|---|---|---|---|
| WO 2009106804 | A2 | 03-09-2009 | GB | 2470142 A | 10-11-2010 |
| | | | WO | 2009106804 A2 | 03-09-2009 |
| DE 19603689 | A1 | 28-08-1997 | NONE | | |
| JP 2005034744 | A | 10-02-2005 | JP | 4731105 B2 | 20-07-2011 |
| | | | JP | 2005034744 A | 10-02-2005 |
| US 3945812 | A | 23-03-1976 | NONE | | |

EPO FORM P0459

For more details about this annex : see Official Journal of the European Patent Office, No. 12/82